# EUROPEAN PATENT APPLICATION

(11) **EP 0 991 004 A2**
(43) Date of publication of application: **05.04.2000**
(21) Application number: 99307527.4
(22) Date of filing: 23.09.1999
(51) Int. Cl.: G06F 17/60

(54) **Process monitoring and control methods**

(30) Priority: 29.09.1998 GB 9821001
(71) Applicant: KPMG Management Consulting, London EC4Y 8BB (GB)
(72) Inventor: McDowall-Rose, Kirk-Dale, London E11 1BG (GB); Payne, Mark H., London SW10 0AW (GB)
(74) Representative: Rees, Alexander Ellison

(57) **Abstract**

A method of monitoring and controlling a process in which the process is broken down into a plurality of phases and each phase is assigned a first weight value. Then each phase is divided into a number of actions which are each assigned second weight values.

A plurality of the actions are selected as key events and assigned a target date, risk value and date scaling function.

At intervals a progress score is generated as the sum of the products of the first weight value of each phase and the second weight value of each completed action in the phase and a date confidence score is generated as the sum ofproducts of the risk values and date scaling functions for key actions, the date scaling function of each key action having a value which is a function of the difference between the assigned target date and the predicted or actual completion date.

The process score and date confidence score are compared to assess the progress and risk of non-completion of the process in time and any necessary actions are taken in response to this comparison.

## Description

This invention relates to a method of monitoring and controlling processes and particularly to a method of monitoring and controlling a plurality of processes being carried out in parallel.

When processes such as development, or other, projects are being carried out it is clearly important to be able to identify whether the projects are proceeding satisfactorily. Where only a single project is being monitored and controlled it is possible to gain sufficient understanding of, and information about, the project to allow an assessment of progress, and the necessary steps of expedite progress when required, to be determined. However, where a plurality of projects are running in parallel it can be extremely difficult and time consuming to keep track of progress of all the projects and to determine appropriate action where insufficient progress is being made. This is a particular problem when multiple projects are not linked by a common goal or completion date but are unrelated and at different stages in their progress towards completion and having unrelated and differing completion time scales.

The present invention was made in order to provide a simple method of monitoring and controlling progress of projects or other processes without requiring excessive time.

In a first aspect, this invention provides a method of monitoring progress of a process comprising the steps of;
dividing the process into a plurality of actions and assigning a weight value to each action;
identifying a plurality of actions as key events and assigning a target date, risk value and date scaling function to each key event;
at intervals during the process, generating a progress score and a date confidence score for the process, the progress score being the sum of the weight values of all completed actions and the date confidence score being the sum of the products of the risk values and date scaling functions for key actions, the date scaling functions for each key action having a value which is a function of the difference between the assigned target date and predicted or actual completion date for said key action,
comparing the progress score and the date confidence score to assess the progress and risk of non-completion of the process on time.

Specific methods of employing the invention will now be defined by way of example and with reference to the accompanying diagrammatic figures, in which:
Figure 1 shows a first example of a scaling function which can be used in the invention;
Figure 2 shows a second example of a scaling function which can be used in the invention;
Figure 3 shows a third example of a scaling function which can be used in the invention;
Figure 4 shows a fourth example of a scaling function which can be used in the invention;
Figure 5 shows a fifth example of a scaling function which can be used in the invention;
Figure 6 shows a sixth example of a scaling function which can be used in the invention;
Figure 7 shows an explanatory diagram showing one method of categorising the progress of projects;
Figure 8 shows a computer screen used in arranging where questionnaires will be sent in one example of the invention;
Figure 9 shows a computer screen used to review and input information in an example of the invention;
Figures 10A to 10C show a spreadsheet used to generate questionnaires in one example of the invention;
Figure 11 shows an overview screen used for reviewing returned questionnaires in one embodiment of the invention;
Figure 12 shows a summary screen summarizing the progress of a single project in one embodiment of the invention;
Figure 13A shows a method of graphically displaying the progress of a number of projects simultaneously in a first embodiment of the invention;
Figure 13B shows a method of graphically displaying date confidence for a number of projects simultaneously in a first embodiment of the invention;
Figure 14 shows another method of graphically displaying progress and date confidence scores for a plurality of projects in a first embodiment of the invention;
Figure 15 shows a method of graphically displaying progress over time for a plurality of projects in a first embodiment of the invention;
Figure 16 shows another method of displaying progress score of a plurality of projects according to a first embodiment of the invention;
Figure 17 shows a further method of displaying progress score of a plurality of projects according to a first embodiment of the invention; and
Figure 18 shows a method of displaying changes in cost of a plurality of projects according to a first embodiment of the invention.

The method of project progress monitoring according to the invention requires initially for each project that the project life cycle be divided into phases. The relative importance of each phase making up the project life cycle is set and a weighting attached to each phase to reflect this relative importance. The relative importance of each phase is the relative significance of completion of that phase. In many processes, this relative significance will be the proportion of the total project time required to complete that phase, or the relative duration of that phase. However, in some applications, for example quality assurance applications, this will be based on assessment of importance. The weight attached to each phase is a percentage with the sum of the weights assigned to all of the phases being 100%.

Each phase is then analysed and the activities which must be completed in order to complete that phase of the project are identified. The activity or group of activities which must be completed within each phase are then assigned weights reflecting the relative importance of each of the activities. Again, similarly to the phase weights, the activity weights will often be related to the time taken to carry out the activity. These weights are percentages and are assigned such that the sum of the weights of the activities making up each phase is 100%.

Target dates for completion of the phases of the project are then set and appropriate risk functions assigned to each target date. A number of possible risk functions are described in detail below. It is not essential that each of the phases is assigned a target date for completion. However, each of the projected completion dates must be a date for some concrete action, for certainty. Accordingly, it is convenient for each of the project completion dates to be a completion date for one of the project phases. Each of the completion dates is assigned a risk weight corresponding to the relative degree of risk of non-completion of the overall project which will arise due to failure to meet that target date. The risk weights are expressed as percentages with the sum of all of the risk weights for all assigned dates for a single project being 100%.

As the project progresses the monitor is notified when each of the phases or actions is completed and is periodically informed of the current estimated dates when each of the incomplete actions assigned a target date is expected to be completed, so that it is possible to generate a progress score and a date confidence score for the project.

The progress score simply has a score in the range zero to 100%, where zero corresponds to a project on which no actions have yet been completed while 100% represents a project which has been fully completed. The date confidence score can be anything in the range minus 100% to plus 100% where minus 100% indicates that the target dates originally set are now wholly unreasonable compared to the dates on which completion is now expected while plus 100% indicates that the set target dates can be met. Generally a higher date confidence score reflects greater confidence in the ability of the project to meet its set target dates.

Calculation of the progress score is carried out by dividing a scoring a region having a total size of 100% between the phases where each phase has a proportion of the scoring region qᵢ. Each of these phases, as explained above, is made up of a number of actions gⱼ each having as a core a proportion pⱼ of the overall phase. Thus, the values qᵢ. and pⱼ correspond to the weighting percentages of the phases and activities discussed above. When an activity has been completed gⱼ is set to one, otherwise gⱼ is set to zero.

In this way, the total progress score of P can be calculated as: 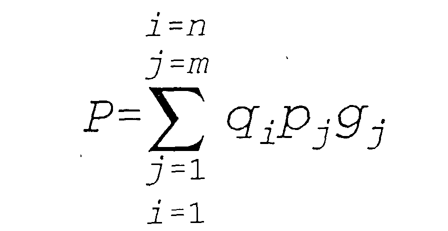 where n is the number of phases, m is the number of activities within each phase i the phase index and j the activity index.

As explained above date confidence is measured on a scale between minus 100% and plus 100%. A low score indicating that the key target dates set are unreasonable relative to actual and currently expected performance and high score that the key target dates are reasonable. The key dates are weighted according to their importance to the project, that is the risk of non-completion or unacceptably late completion if they are not achieved.

In order to generate the date confidence score the desired target dates initially set are compared to the current estimated dates at which it is now estimated the target phases not yet completed will be completed and the target phases already completed were completed and this comparison is used to generate a date confidence value. The date confidence values for each of the set key dates are summed to produce an overall date confidence value for the project.

The date confidence score for a project is calculated using the following equation: 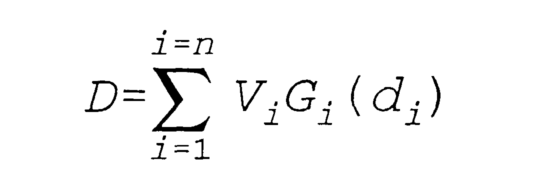 where Vᵢ is the risk weighting of the key date, dᵢ is the date at which the last estimate of key date completion was produced, Gi is a function relating the risk to the difference between the initial set desired dates and the current estimated dates or actual completion dates, is the date issue index and n is the total number of key dates for the project.

It will be understood that key dates in a project for carrying out actions have different properties. That is, for some key dates, completion ahead of schedule is desirable and completion behind schedule is undesirable while for others completion either ahead of or behind schedule is undesirable. Similarly, even where both early and late completion are undesirable it may be that late completion is more likely to cause difficulties than early completion, i.e. late completion is more undesirable than early completion.

Further, the rate at which late or early completion of key targets causes difficulties may vary. In order to allow the generated date confidence scores to accurately reflect the consequences of early or late achievement of key targets on the overall progress of the project the scaling function G can have a number of forms and a non-exhaustive set of exemplary functions are shown in the accompanying figures and discussed below.

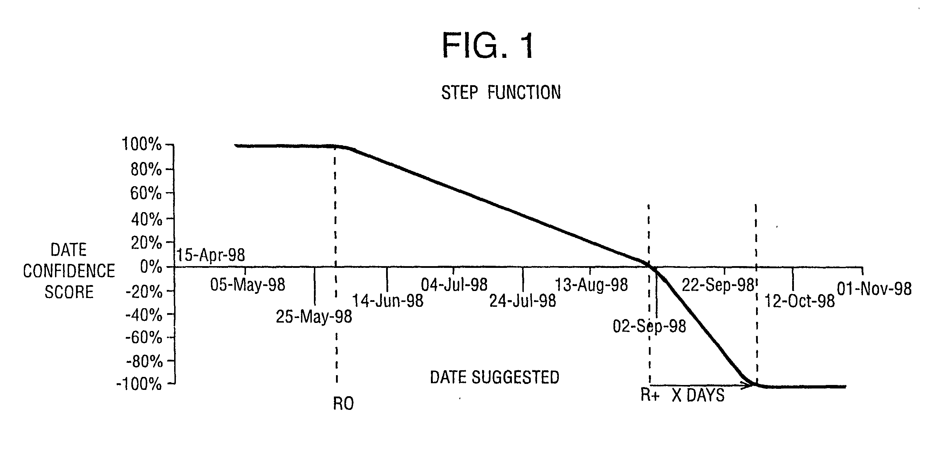

A first possible function is a step function, an example of which is shown in Figure 1. In the step function, if the expected completion date is less than a lower limit date Rₒ then the value is constant at plus 100%. If the expected date is between the lower limit date Rₒ and an upper limit date R₊ then the score allocated decreases linearly to 0% at R₊. Similarly, if the date suggested is between the upper limit R₊ and a final date R₊+X then the score is a linear decreasing function dropping to minus 100% on R₊+X. If the suggested date is after R₊+X then the score remains constant at minus 100%. The gradient of the linear decreasing function in the regions R₀ to R₊ and R₊ to R₊+X may be different, as shown in figure 1 where the gradient is greater in the region between R₊ and R₊+X than in the region between R₀ and R₊.

The step function is suitable for a date in which early complection is good and late completion is bad.

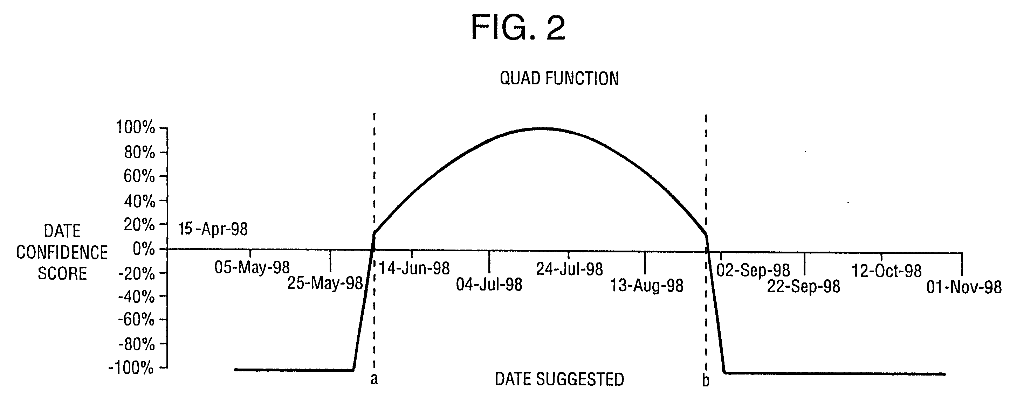

A second function is a Quadratic function, an example of which is shown in figure 2. With the Quadratic function, if the date suggested is before a lower limit date A or after an upper limit date B the score is minus 100%. If the suggested date is date A or date B the score is 0% and if the suggested date is between the lower and upper limit dates A and B the score has a positive value rising to a maximum of plus 100% exactly half way between the lower and upper limit dates A and B.

This function can be used where it is preferable that a date be between two particular dates and early dates will be penalised to the same extent as late dates.

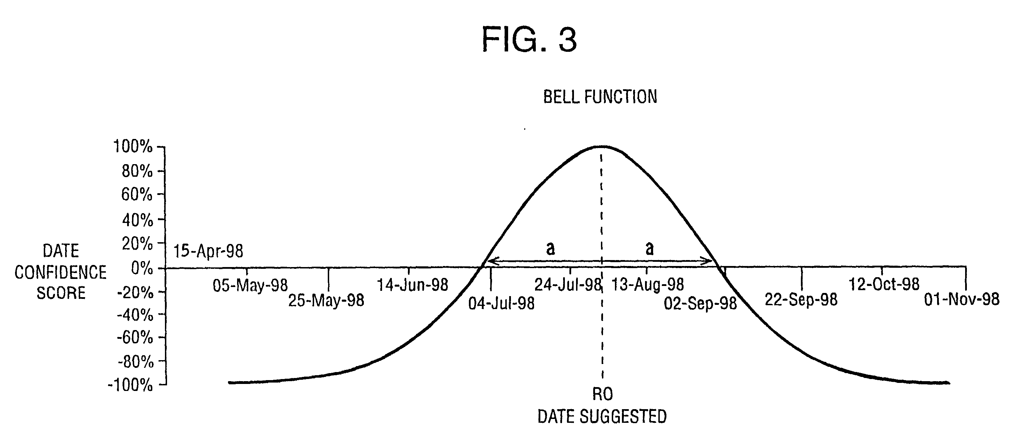

A third possible function is a bell function, an example which is shown in figure 3. With the bell function a best date R₀ is set together with the number of days A from R₀ that bind the region within which completion would be desirable. The score rises gradually from -100% for suggested dates well before the date R₀-A to 0% at the date R₀-A. The value then rises to +100% for a suggested date Ro and then falls back to 0% at R₀+A. The value then drops gradually to -100% for suggested dates a lot greater than R₀+A. The bel function is symmetrical about best date R₀.

The bell function is useful when a particular date is required as well as dates within a particular band.

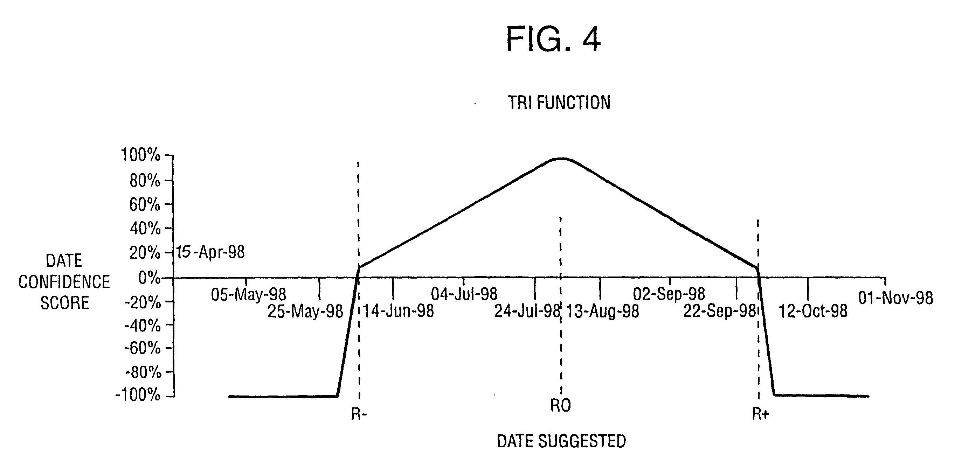

A fourth possible function is a triangular function and an example is shown in figure 4. In the tri function the score is 100% for suggested dates before a lower limit date R- or after an upper limit date R+.

The score is calculated using a triangular distribution so that the score rises linearly for suggested dates between the lower limit date R- and a preferred date Ro to a score of +100% to date R₀. The score then drops linearly for suggested dates between the preferred date R₀ and the upper limit date R+. Further, the preferred date R₀ need not be equidistant from the upper and lower limit dates R- and R+ so that the function need not be symmetrical.

The tri function can be used in similar situations to the bell and quad functions but does not require that the preferred date be in the middle of the band of acceptable dates bounded by the dates R- and R+.

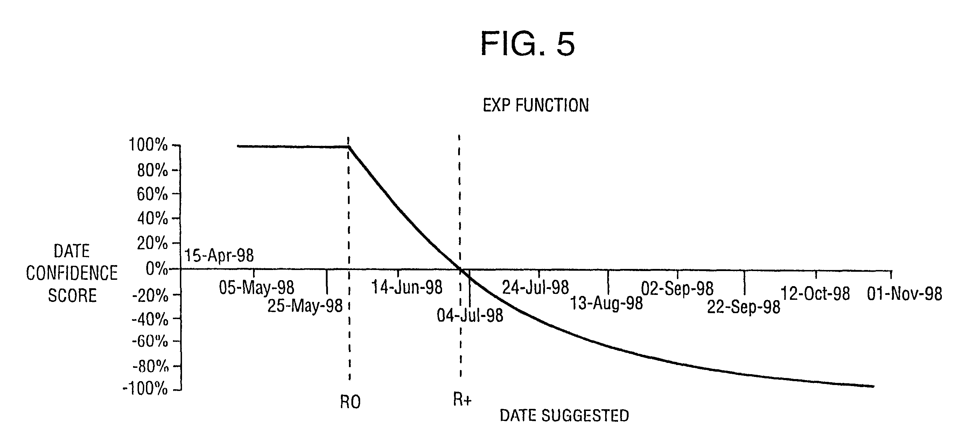

Another possible function is an exponential function, an example of which is illustrated in figure 5. The expontial function has a score of +100% for all dates before the best date R₀. After date R₀ the score decreases exponentially to a value of 0% at an upper limit date R+ and then continues to decrease exponentially to -100% for the dates well after R⁺. The exponential function can be used in situations where the target should be met as early as possible but completion after a particular date becomes steadily more undesirable.

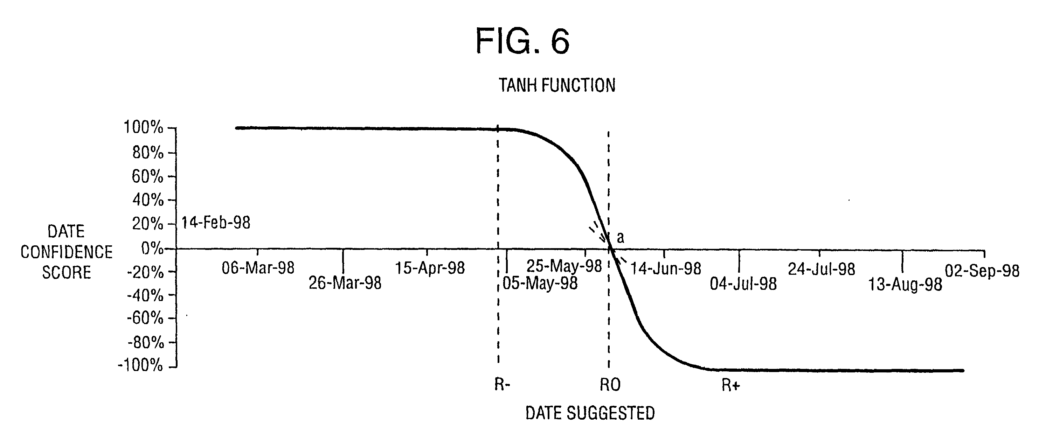

A sixth possible function is a tanh function, an example which is shown in figure 6. The tanh function uses a hyperbolic tanh which behaves similarly to the step function described above but has steady turning points. The function has a value of +100% for estimated dates before a lower date R- and a constant value of -100% for estimated dates after an upper date R+. Between the lower and upper date R- and R₊ the value decreases steadily from +100% to -100% passing through 0% at a date Ro between R- and R+. The rate of decrease between the lower and upper limit dates R- and R₊ is determined by the steepness of the curve where is passes 0% at date R₀.

By carrying out the calculations given in equations 1 and 2 numerical values expressed as percentages can be generated for date confidence and progress for the project. By comparing the progress score to the date confidence score and comparing changes in the progress score and the confidence score the progress of the project can be easily followed.

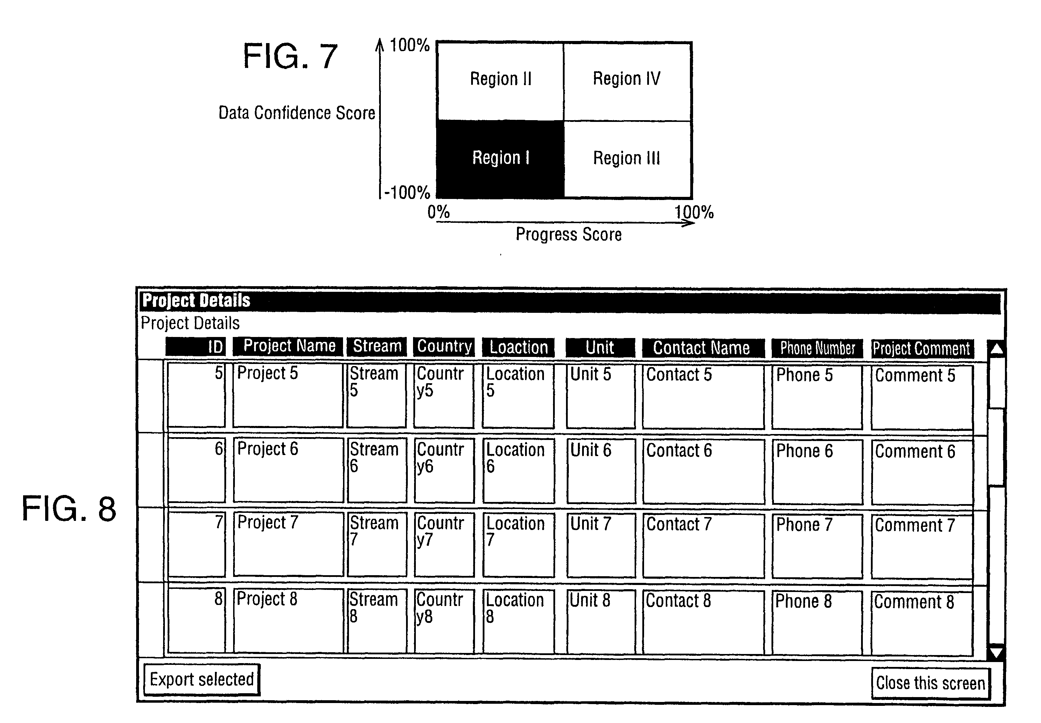

One method of comparing the progress score and date confidence score is shown graphically in figure 7 in which date confidence score is plotted against progress score graphically. The graph can be notionally divided into four regions 1 to 4 as follows:
Region 1 comprises date confidence scores in the range 100% to 0 and progress scores in a range 0 to 50%;
Region 2 comprises date confidence scores in the range 0 to +100% and progress scores in the range 0 to 50%;
Region 3 comprises date confidence scores in the range -100% to 0% and progress scores in the range 50% to 100%;
Region 4 comprises date confidence scores in the range 0 to +100% and progress scores in the range 50% to 100%.

Projects having scores in region 1 have low progress scores and low date confidence scores. These projects are particularly risky since the estimated dates of completion are outside of what is considered to be reasonable and they have not progressed a great deal.

Projects in region 2 have low progress scores and high date confidence scores. These projects are expected to achieve desired completion dates but have so far shown little achievement completing their plans. Projects in this region are at risk from their inactivity.

Projects in region 3 have high progress scores and low date confidence scores. These have plans that are unreasonable but are nevertheless progressing. These projects are at risk of not completing on time.

Projects in region 4 have made progress and have high date confidence scores. Projects in this region have good plans and are on target to achieve them.

As projects progress to completion they should move upwardly from region 1 to region 4 through either region 2 or region 3.

A very simple approach is to regard region 1 as a red zone in which projects are at high risk of failure, regions 2 and 3 as amber zones in which projects suffer from some risk and should be monitored to ensure that progress proceeds acceptably and region 4 is a green zone in which projects are unlikely to be at risk.

The number of zones employed and the number of corresponding colour codes can be varied as desired to clearly present information about project status. The date confidence and progress scores used to define the zones can also be varied.

Estimates of completion dates should normally be revised and any charges provided to the monitor on a regular periodic basis. Actual completion of phases and actions can also be reported on a regular periodic basis or can be reported as the phases or activities are completed. The monitor should review progress of the project on the same regular periods as those for which the date estimates are generated. Generally the reporting and reviewing periods should be linked to the overall time scale of the project and the number of activities so that there will normally be at least one activity completed per period. This is preferred because it greatly simplifies the identification of projects which are failing to progress properly.

The estimated cost to complete the project can also be periodically reported to the monitor. This allows changes in cost over time to also be tracked and analysed.

It is not essential that the reporting and review intervals be regular and periodic. However this is convenient and makes analysis of progress straightforward.

The changes in project date confidence score and progress score from review period to review period should be noted. A project which has not increased its progress score from one review to the next is static and is not progressing towards completion. A project whose date score decreases from one review to the next has slid. In such a project the estimated key dates are not just slipping in time but are slipping in a manner which is harmful to the projects prospects of success.

Amber or red projects in regions 1 to 3 are particularly at risk if they become static or suffer slippage and such amber or red projects are of course inherently more at risk than green projects in region 4 suffering a similar slippage or becoming static.

Projects which are identified as slipping or becoming static or suffer unexpected increases in cost, and particularly such projects when they fall within the amber or red zones, should be reviewed in more detail if necessary and appropriate remedial action should be taken to limit cost, expedite progress or improve date confidence.

An example of a specific monitoring system employed in the invention will now be described in detail, by way of example only.

This system is carried out by specific software operating on a general purpose personal computer (PC).

In order to provide the monitor with the necessary information to allow the process monitoring and control function to be carried out regular questionnaires are sent out by the monitor to the personnel carrying out the processes and the responses to the questionnaires are used to carry out the process monitoring and control function.

As explained above, the use ofa regular report and response period is not essential. However, use of a fixed regular period makes matters simpler for the monitor and the questionnaire respondents.

When the project phase, actions and target dates, together with the target date risk factors and scaling functions have been set, as explained above, the persons responsible for responding to the questionnaires must be identified, and this information supplied to the computer. At this point the initial estimated cost of the project is set, and supplied to the computer.

Figure 8 shows the screen used to determine where the questionnaires will be sent.

Each line on the screen in Figure 8 corresponds to a separate questionnaire to be sent at each enquiry interval. The name of the project, responsible business stream, country, location and business unit together with the contact name and phone number of the person who is to fill in and return the questionnaire can all be entered together with any comments required to identify or explain matters to the contact. Any of these pieces of information which are not applicable to a specific project can of course be left blank.

Normally, only a single questionnaire is sent out on each project, but multiple questionnaires could be sent to different contacts as a double check or where a project is so complex or dispersed that the required information is not held by a single contact.

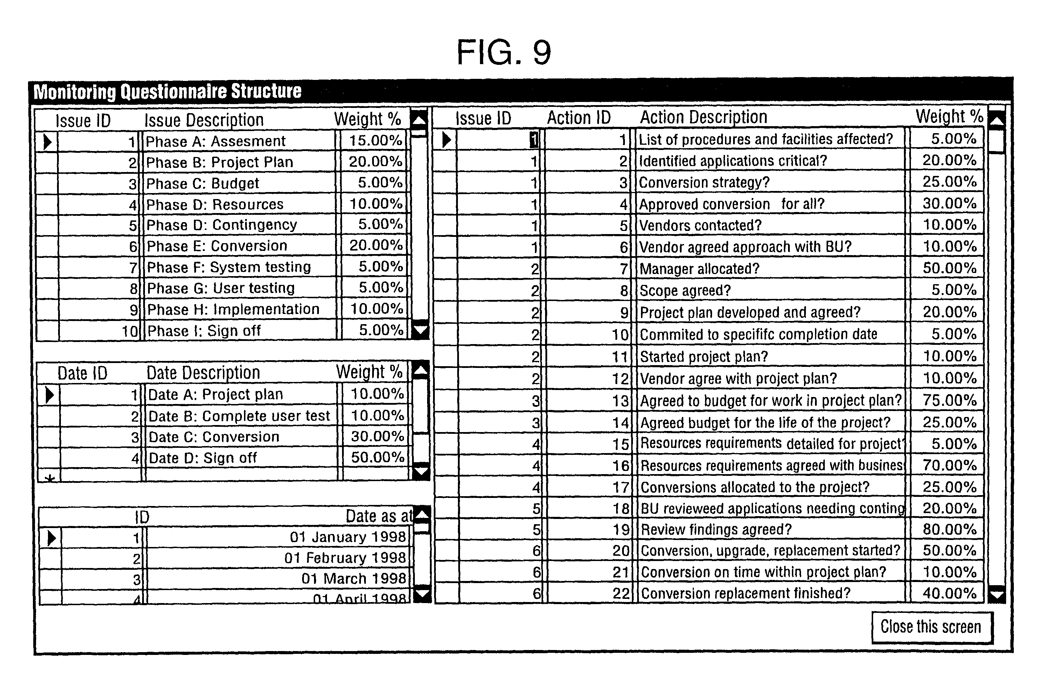

The contents of the questionnaires and the processing of the data from the return questionnaires is set up using a questionnaires structure screen shown in figure 9.

The questionnaires structure screen provides a series of lists.

The first list, shown at the top left hand side of the screen, is the list of phases of the project life cycle. The identity of each phase together with the weight assigned to that phase is listed.

On the right hand side of the screen the group of activities which must be completed within each phase is listed and identified by activity or action number and the number ofthe related phase or issue together with a description of the action or activity and the relative weighting attributed to that activity within its phase.

In this example the total weighting of all ofthe phases adds up to 100% while the weights of all of the actions within each phase also add up to 100%.

The list in the middle on the left hand side of the screen lists the actions identified as completion dates together with the weighting associated with each ofthese actions while the bottom list on the left hand side of the screen are the corresponding target dates for completing these actions.

In this case the actions identified as completion dates and assigned target dates all correspond to completion of specific phases of the project. This is not essential and the actions listed as completion dates could be any action. However, if the actions assigned completion dates do not correspond to the completion of phases the monitor must be careful to ensure that it is quite clear what must be done for the completion date to be regarded as completed.

The action, place and date and weighting information can all be edited using this screen if errors are identified or the project changes.

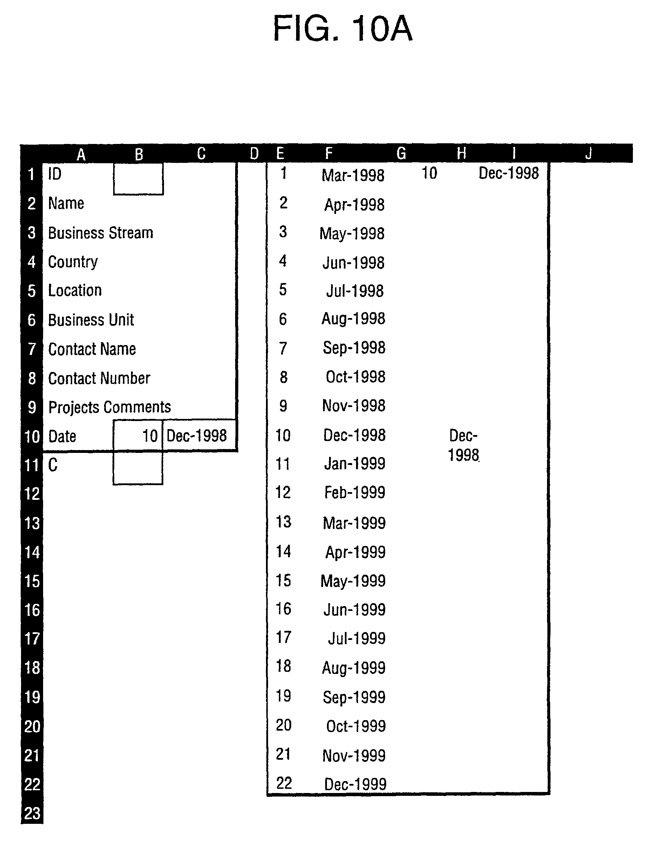

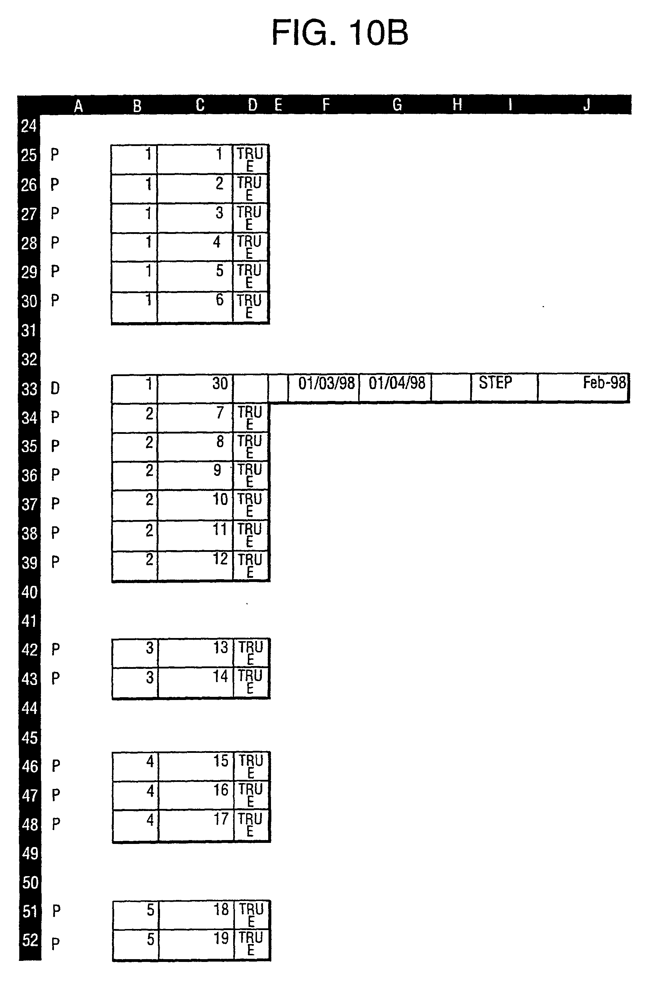

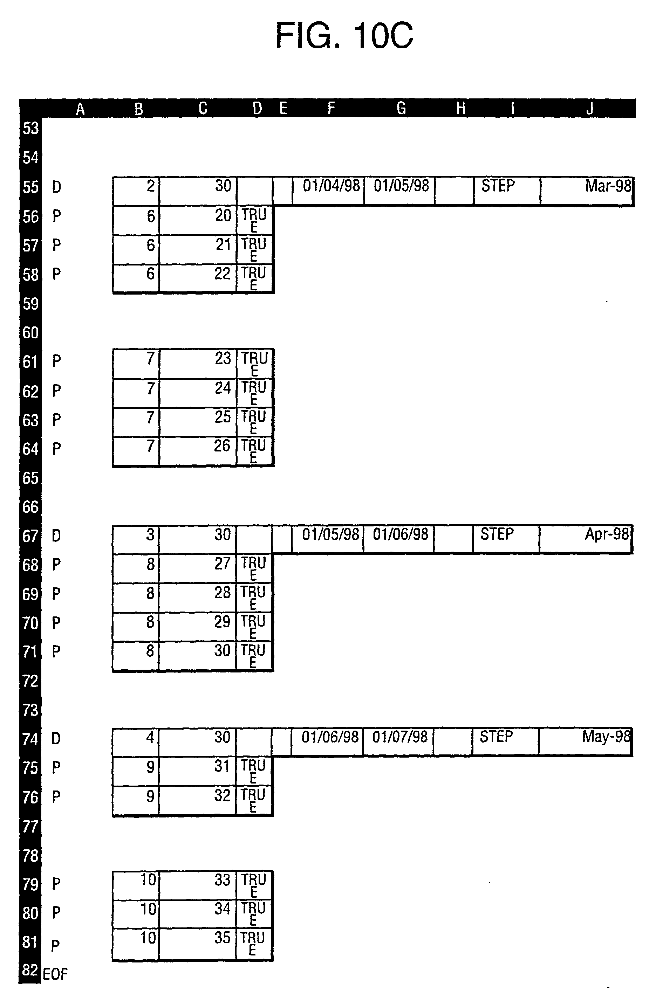

The questionnaires are generated using a spread sheet having rows 1 to 82 and columns A to J as shown in figures 10 A to C, with data from the screens of Figures 8 and 9 being automatically entered into cells of the spreadsheet.

Cells E1 to I22 are used to select the date on which the questionnaires are issued. These dates can be varied by modifying the contents of cells F1 to F22.

Column A contains labels which identify the contents of the rows as follows:
ID - unique project ID
Date - date as at
C - Cost
P - Progress
D - date
EOF - end of file marker
The contents of cells B1 to B9 which contain information identifying the project and the contact who should answer the questionnaires contain the data inputted on the questionnaires generating screen shown in figure 8 in the various columns.

Columns B and C identify the actions by phase number and action number, with the actions being grouped together by phase. These cells contain the data shown and/or inputted on the screen shown in Figure 9 in the various lists. The questionnaire respondent identifies by checking in column D whether the action identified in that row has been carried out.

If the estimated cost of the project has changed, the respondent informs the monitor by inserting the new estimated cost in cell B11.

When the questionnaires are returned the program identifies which of the actions have been completed and whether the estimated cost has changed and calculates the progress score and date confidence score for the project from this information.

In order to eliminate data entry errors, in this embodiment of the system the questionnaires and responses are sent out by E-mail so that the data regarding action completion contained in the questionnaires can be automatically uploaded by the program to calculate completion and date confidence scores.

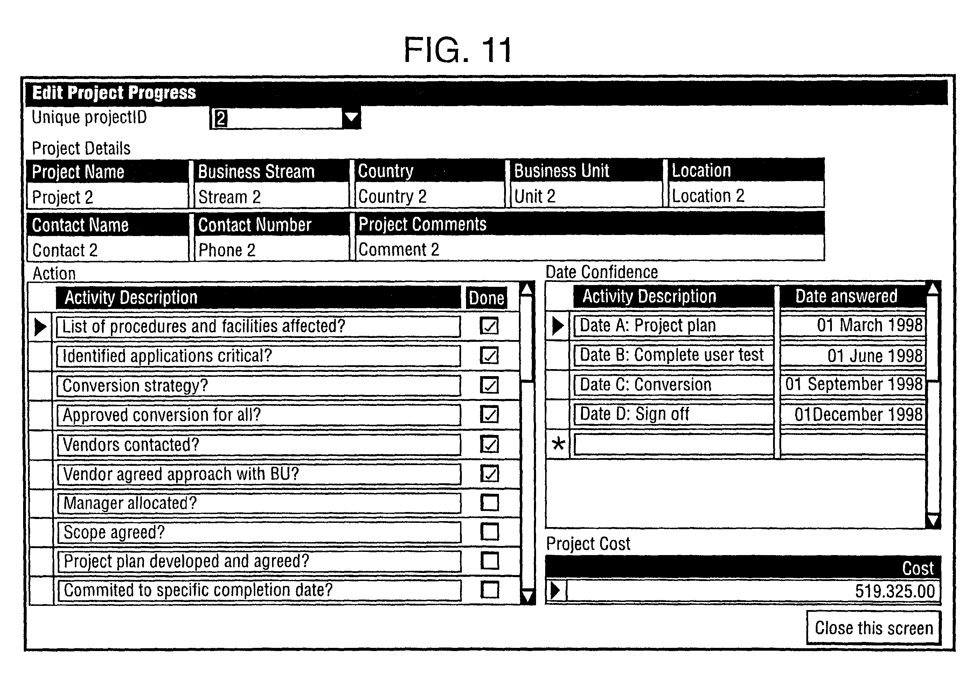

Once the questionnaires have been returned they can be reviewed using an overview screen shown in figure 11.

This provides a listing of the activities and identifies those which have been completed together with information uniquely identifying the project and the contact providing the information and reports a listing of the project completion dates and the current estimated project cost.

The project cost is the estimated total cost of the project and, as explained above, is normally input when the questionnaires structures and other data regarding the project are first input to the system. Alternatively, the cost can be initially undefined and be provided by the questionnaire respondent in the first questionnaire. Changes in cost to complete a project are clearly significant in their own right. Further, where a large number of projects are being monitored simultaneously, the estimated value of each project can be a useful indication to the monitor of the relative importance of the project and to allow the order in which remedial activities should be carried out where projects fall behind schedule to be determined.

If review of the questionnaire data suggests that data is corrupt or misleading, for example activities are identified as having being carried out in a different order to that expected, the apparent speed with which actions have been carried out appears unreasonably fast, other apparently unreasonable data is provided or questionnaires from different contacts disagree, this can be identified from the summary screen so that suitable follow up enquiries can be made. Further, when it is established that information submitted by the questionnaires is incorrect the incorrect data can be deleted and correct data substituted by editing from this screen.

There are many ways in which the progress and date confidence scores generated by the method can be displayed.

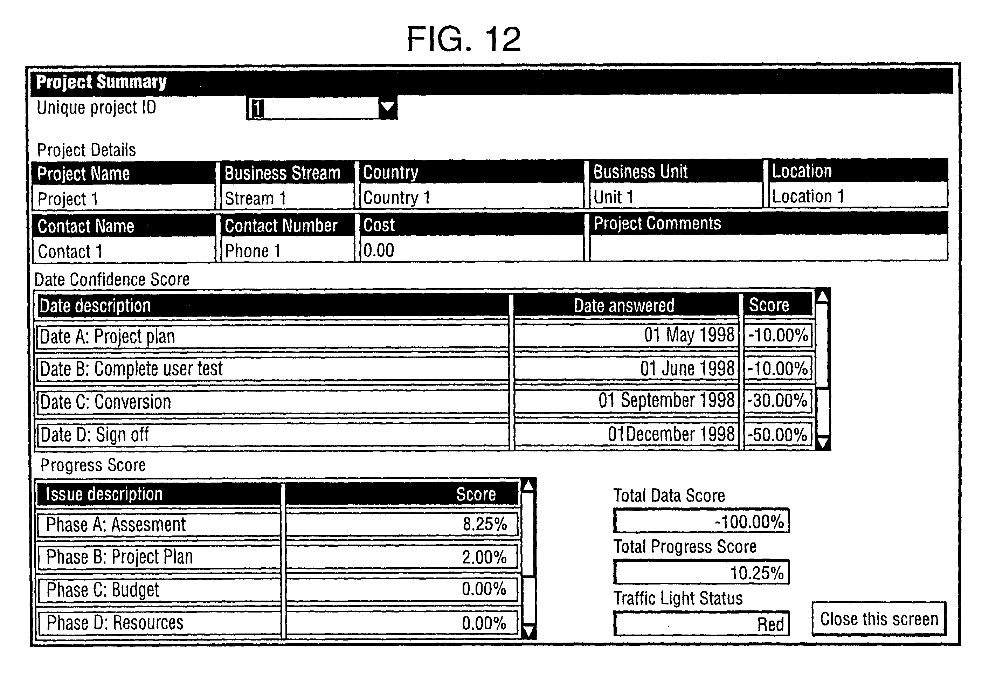

One method is shown in figure 12 where a summary of progress ofa single project is given on one screen. This identifies the project, the actions completed and project completion dates and shows the date confidence and progress scores together with the colour zone the project currently falls into, identified on screen as traffic light status.

Another method of identifying project status is to display the status graphically and this is particularly useful for comparing or reviewing progress of a number of projects simultaneously.

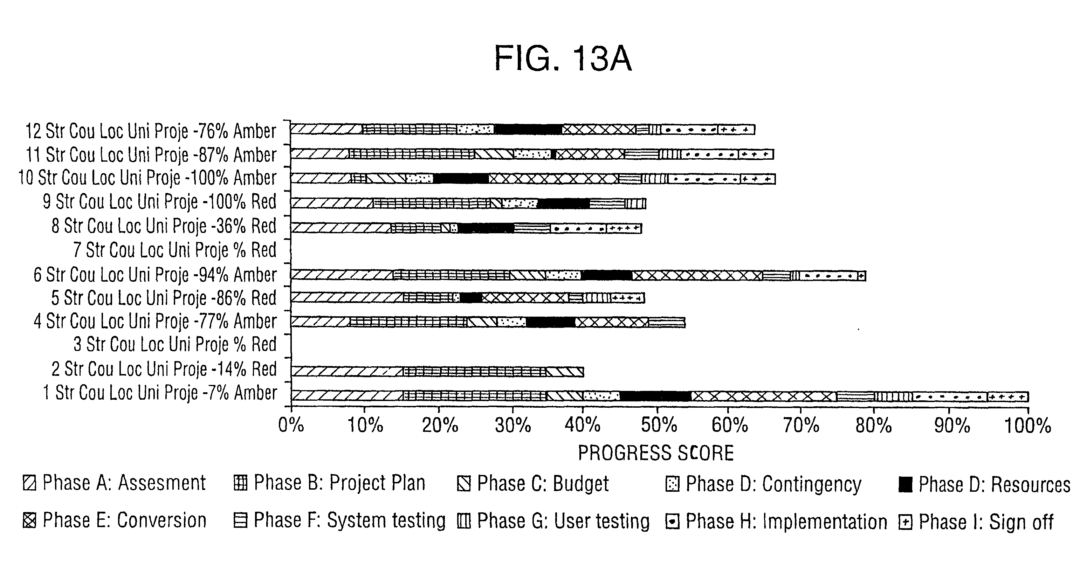

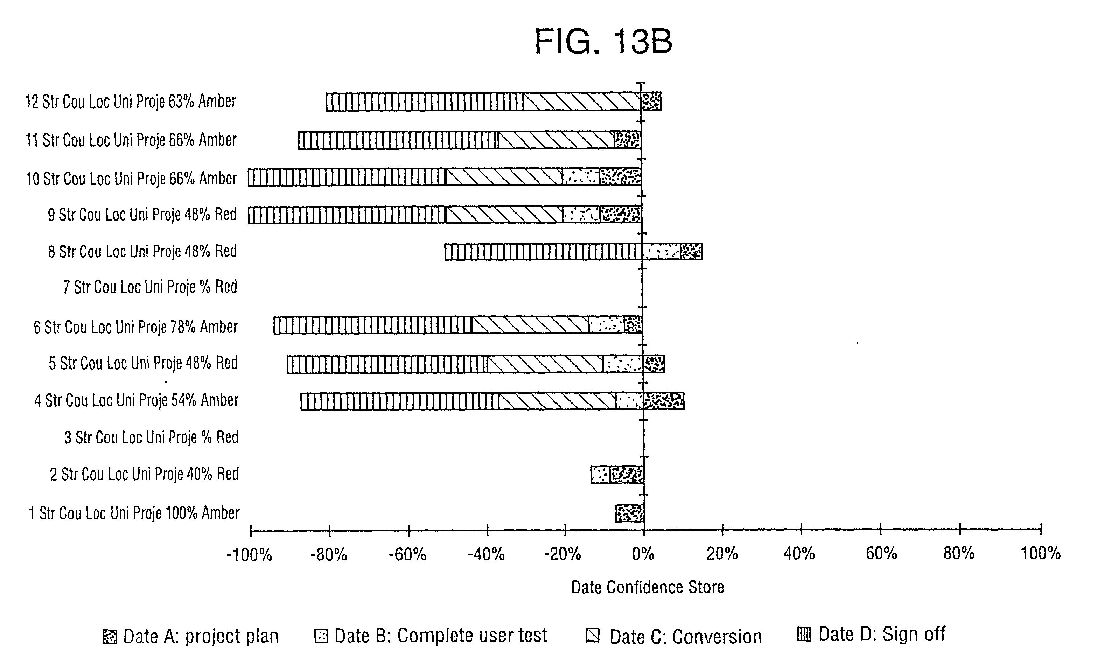

A first method of graphical display is shown in figures 13A and 13B where figure 13A shows progress of a number of projects and Figure 13B shows date confidence of the same projects. In figure 13A the total length of the bar for each project shows the progress score while coloured coding or shading is used to identify the phases already completed for each project. Clearly a display of this type is most useful where the projects all have corresponding phases to allow easy comparison.

In figure 13B the display shows the date confidence for each project. Each bar shows all of the due dates for the project and the current date confidence score for each due date. For example, the bar for project 8 has an implementation date with a date confidence score of -50% and other dates with a low positive date confidence score.

If no estimated completion dates have been provided for a project the display defaults that project to a -100% date confidence score.

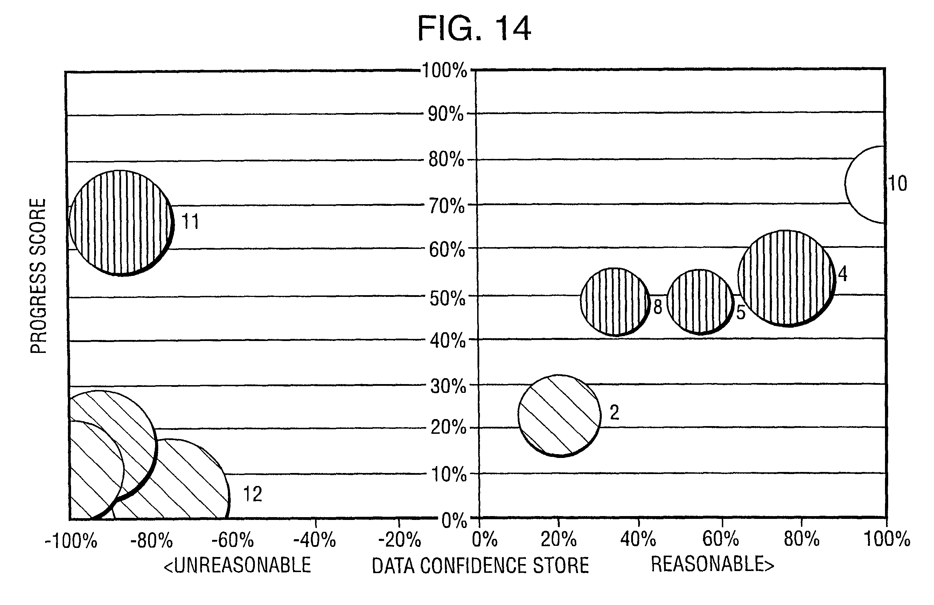

Another display is shown in figure 14 where project progress is shown in a bubble chart with each bubble being centred at the appropriate point on a graph of date confidence score against progress score with the size of the bubble being based upon the estimated current cost of the project and the colour of the bubble being red, amber or green according to the appropriate risk colour code.

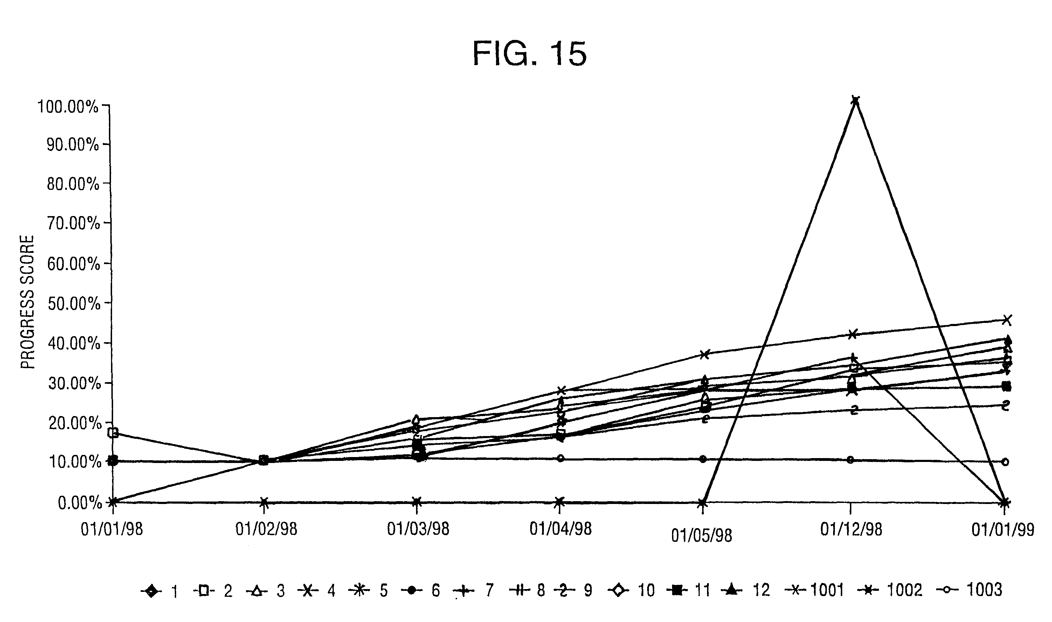

Another method of graphically displaying the information is shown in figure 15 where a time series chart for a number of projects is shown, the graph being of progress score against date for each project. Where no information is received for the project, that is to say no questionnaire is returned, a zero progress score is indicated. In this example the questionnaires have been issued on a monthly basis.

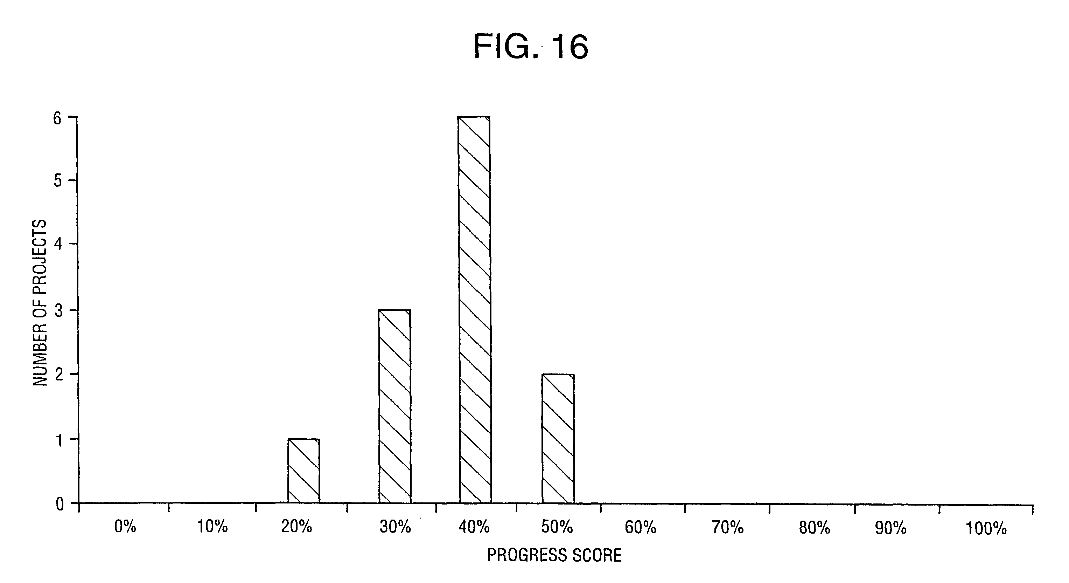

Another approach is shown in figure 16 where a frequency chart is generated as a bar chart showing for each progress score band, in this case bands 10% wide, the number of projects having a progress score in that band. This can be particularly useful where groups of projects are being compared because the relative process score distributions of the projects can identify groups which are running into trouble. In general groups displaying frequency charts skewed to the left i.e. having large numbers of projects with low progress scores, are more at risk than groups having frequencies skewed to the right.

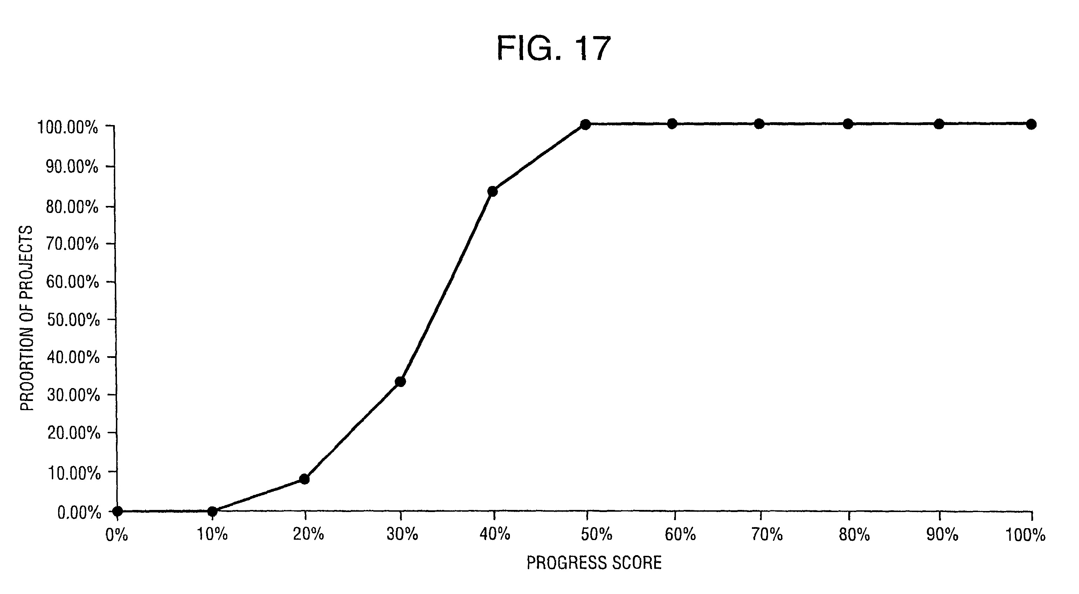

Another example of graphical display of information is shown in figure 17 as a chart of progress score against cumulative percentage of projects having that progress score. Groups of projects performing well will have very steep curves on such a graph, which is useful for identifying the number of projects having scores less than some particular value for further investigation.

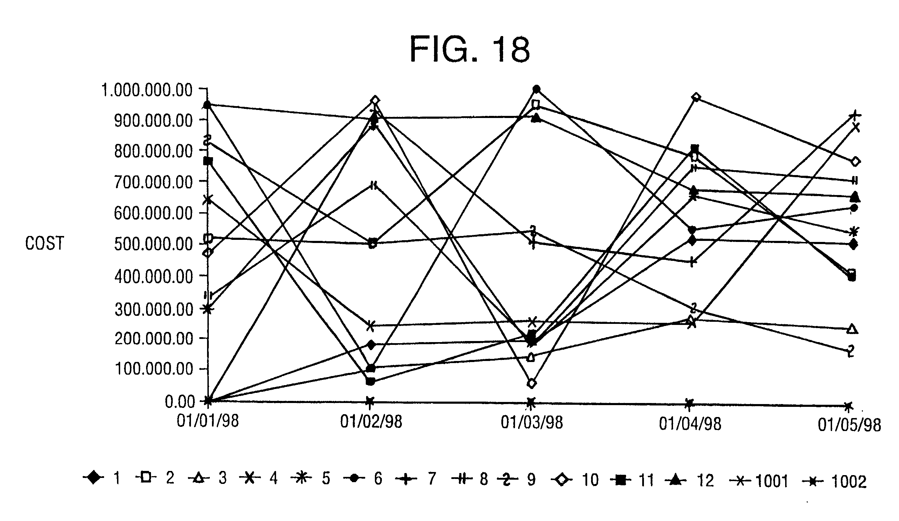

A final example of graphical display of information is shown in Figure 18 where a graph of changes in estimated cost over time for a number of projects is shown. In this graph the cost measurement is increase in cost relative to initial cost, but actual cost could be used instead.

In practice it is often convenient to have the monitor notified of changes in estimated cost only when the change exceeds a set threshold such as 5% or 10%, for example.

The scales and precise layout of the graphical representations can of course be varied as desired.

The invention is particularly useful where a number ofproj ects must be monitored. The use of a consistent mathematical method of monitoring the progress of the different projects according to the invention allows meaningful comparisons of the progress and date confidence scores of different projects.

The invention can be carried out using appropriate software on a general purpose computer. Alternatively some or all of the functions could be carried out by dedicated electronic hardware, but it would normally be preferred to employ software on a general purpose computer to carry out the invention.

The use of date confidence scores in the range of +100% to -100% and the use as the various sets of weighting factors of percentages summing to 100% is not essential but is convenient to avoid the need for normalisation of the results of the calculations to generate the overall date confidence score and completion score of the or each project. Further, most people are generally familiar with the concept of percentages and this simplifies the task of generating appropriate weighting factors.

In the example of the invention discussed above the project to be monitored and controlled is divided into a series of phases which are in turn divided into a series of actions, It would be possible to remove the phases and attached all of the progress dates and the key dates directly to specific actions. However, it has been found that most projects which are complex and long term enough for the monitoring method according to the invention to be necessary break down into such a large number of individual actions that it is very difficult to assign realistic weights to them. Further, as a practical matter it is normal for projects to be divided up in this two stage manner to define project goals and time scales so this method of considering progress and key dates in the project fits in well with normal practice, allowing the phases and actions to be easily defined and completion of actions to be unambiguously reported.

The cost referred to above will usually be monetary cost. However other measures of cost as other required resources or other parameters such as complexity could be used.

In the examples above, the overall date confidence score of a project is based on both actual completion date of completed actions and expected completion date of uncompleted actions. It would also be possible to base the overall date confidence score on the expected completion date of incompleted actions only.

Although this description referred to projects, the method according to the invention is suitable for use to monitor and control any type of process or activity including quality assurance processes.

## Claims

1. A method of monitoring progress of a process comprising the steps of;
dividing the process into a plurality of actions and assigning a weight value to each action;
identifying a plurality of actions as key events and assigning a target date, risk value and date scaling function to each key event;
at intervals during the process, generating a progress score and a date confidence score for the process, the progress score being the sum of the weight values of all completed actions and the date confidence score being the sum of the products of the risk values and date scaling functions for key actions, the date scaling functions for each key action having a value which is a function of the difference between the assigned target date and predicted or actual completion date for said key action,
comparing the progress score and the date confidence score to assess the progress and risk of non-completion of the process on time.

2. The method of claim 1, in which the process is divided into a plurality of phases and each phase is assigned a first weight value, then each phase is divided into a number of actions which are each assigned second weight values and the progress score is calculated as the sum of the products of the first weight values of each phase and the second weight values of the completed actions in that phase.

3. The method of claim 2, in which the key events are identified as a completion of all actions in a phase.

4. The method of any preceding claim, in which the project is assigned an estimated cost and changes in this estimated cost are recorded.

5. The method of any preceding claim, in which questionnaires requesting progress information are periodically sent out and returned.

6. The method of Claim 5, in which the method is carried out by a computer programme.

7. The method of Claim 6, in which the questionnaires are automatically sent out in electronic form.

8. The method of Claim 7, in which the questionnaires are returned in electronic form and automatically used to calculate the progress score and date confidence score.

9. A method of controlling a process comprising the steps of monitoring progress of the process according to any preceding claim and then responding to the assessed progress and risk of non-completion by issuing appropriate instructions.

10. A computer programmed to carry out the method of any preceding claim.
